# EUROPÄISCHE PATENTSCHRIFT

(11) **EP 4 506 664 B1**
(45) Veröffentlichungstag und Bekanntmachung des Hinweises auf die Patenterteilung: **24.09.2025**
(21) Anmeldenummer: 24181603.2
(22) Anmeldetag: 12.06.2024
(51) Int. Cl.: G01D 5/244, G01P 3/00, G01P 15/00

(54) **ENCODER UND SYSTEM MIT EINEM SOLCHEN ENCODER**
ENCODER AND SYSTEM COMPRISING SUCH AN ENCODER
CODEUR ET SYSTÈME COMPRENANT UN TEL CODEUR

(30) Priorität: 10.08.2023 DE 102023121484
(43) Veröffentlichungstag der Anmeldung: 12.02.2025
(73) Patentinhaber: SICK AG, 79183 Waldkirch (DE)
(72) Erfinder: Dr. Sellmer, Christian, 78166 Donaueschingen (DE)
(74) Vertreter: Manitz Finsterwald Patent- und Rechtsanwaltspartnerschaft mbB

(56) Entgegenhaltungen:
- EP-A2- 1 480 448
- DE-A1- 102015 217 907
- DE-A1- 102018 000 510
- US-A1- 2012 041 711
- US-A1- 2023 231 502

## Beschreibung

Die vorliegende Erfindung betrifft einen Encoder zur Überwachung translatorischer und/oder rotatorischer Bewegung eines beweglichen Bauteils, sowie ein System mit einem solchen Encoder.

In unterschiedlichsten Systemen ist es notwendig, die Bewegung eines beweglichen Bauteils zu überwachen und entsprechende Informationen an eine übergeordnete Steuereinheit zu übermitteln. Diese übergeordnete Steuereinheit steuert dann abhängig von der jeweiligen Bewegung entsprechende Komponenten, wie beispielsweise Aktuatoren zur Bewegung des beweglichen Bauteils. Üblicherweise umfassen die hierbei ermittelten Bewegungsinformationen Positions- und Geschwindigkeitsinformationen, ggf. auch Beschleunigungsinformationen. Die jeweiligen Bewegungsinformationen werden dabei regelmäßig aus Bewegungssignalen, welche von einer Sensoreinrichtung eines entsprechenden Encoders an das übergeordnete System übermittelt werden, erzeugt. Dabei resultiert, beispielsweise aufgrund relativ großer zu überbrückender Distanzen, die Verbindung zwischen dem Encoder und der übergeordneten Steuereinheit regelmäßig in einer erheblichen Limitierung der Übermittlungsrate an Daten. Mit anderen Worten, die Verbindung zwischen dem Encoder und der übergeordneten Steuereinheit ist nur dazu in der Lage, einen Teil, insbesondere einen Bruchteil, der von dem Encoder ermittelten Informationen zu übertragen. Übermittelt werden dann beispielsweise über bestimmte Perioden gemittelte Werte für die jeweiligen Bewegungsinformationen. Dies ist im Allgemeinen kein Problem, da die üblichen Übermittlungsraten für eine geeignete Steuerung der entsprechenden Komponenten ausreichend sind.

Nun gibt es jedoch Anwendungen, bei welchen sehr kurze sogenannte Jerk-Evente in Gestalt eines Rucks (also insbesondere in Gestalt eines Peaks der Änderung der Beschleunigung) des beweglichen Bauteils besonders problematisch sind. Insbesondere können diese Jerk-Evente dazu führen, dass die Bewegungsinformationen fehlerhaft erzeugt werden oder gar eine Warnungs- oder Fehlermeldung ausgegeben werden muss, damit ein Benutzer entsprechend reagieren kann. Folglich ist es in bestimmten Systemen notwendig, solche Jerk-Evente zuverlässig zu identifizieren und für den Betrieb der übergeordneten Steuereinheit zu berücksichtigen.

Bisher wurden solche Jerk-Evente stets durch eine Analyse der Bewegungsinformationen in der übergeordneten Steuereinheit identifiziert. Dabei hat sich jedoch gezeigt, dass solche Systeme nicht für alle Anwendungen dazu in der Lage sind, auftretende besonders kurze Jerk-Evente zuverlässig genug zu identifizieren.

Es ist daher die Aufgabe der Erfindung, die bekannten Systeme zur besseren Jerk-Erkennung weiterzuentwickeln.

Zur Lösung dieser Aufgabe wird erfindungsgemäß ein Encoder gemäß Anspruch 1 sowie ein System mit einem solchen Encoder vorgeschlagen. Als Stand der Technik sei konkret auf die DE 10 2015 217 907 A1 und die US 2023/231502 A1 verwiesen.

Die vorliegende Erfindung betrifft einen Encoder zur Überwachung translatorischer und/oder rotatorischer Bewegungen eines beweglichen Bauteils. Ein erfindungsgemäßer Encoder umfasst: eine Sensoreinrichtung, welche dazu ausgebildet ist, Bewegungsinformationen zu dem überwachten Bauteil zu ermitteln; eine Ausgabeeinheit, welche dazu ausgebildet ist, mit einer übergeordneten Steuereinheit zu kommunizieren; und eine Auswerteinheit, welche dazu ausgebildet ist, aus den ermittelten Bewegungsinformationen Jerk-Informationen, welche einen Ruck des überwachten Bauteils anzeigen, zu erzeugen. Die Auswerteinheit ist ferner dazu ausgebildet, die erzeugten Jerk-Informationen zusammen mit zumindest einem Teil der ermittelten Bewegungsinformationen an die Ausgabeeinheit zu übergeben. Alternativ bzw. ergänzend dazu kann die Auswerteinheit auch dazu ausgebildet sein, anhand der erzeugten Jerk-Informationen Korrekturen an den ermittelten Bewegungsinformationen vorzunehmen und zumindest einen Teil der korrigierten Bewegungsinformationen an die Ausgabeeinheit zu übergeben. Die Ausgabeeinheit ist dazu ausgebildet, die erzeugten Jerk-Informationen zusammen mit einem Teil der ermittelten Bewegungsinformationen oder einen Teil der korrigierten Bewegungsinformationen an die übergeordnete Steuereinheit auszugeben.

Dabei kann jede der einzelnen Komponenten, wie insbesondere die Ausgabeeinheit, die Auswerteinheit und/oder die übergeordnete Steuereinheit, wenigstens eine eigene Recheneinheit umfassen, beispielsweise in Gestalt einer anwendungsspezifischen integrierten Schaltung (eines ASIC), eines FPGAs (Field Programmable Gate Array) und/oder eines programmierbaren Mikrocontrollers. Durch die Auswerteinheit im Encoder ist es möglich, die Gesamtheit der durch die Sensoreinrichtung bereitgestellten Bewegungsinformationen zur Ermittlung der Jerk-Informationen zur verwenden. Damit ist es möglich, auch kürzeste Jerk-Evente zuverlässig zu erkennen und die spätere Steuerung durch die übergeordnete Steuereinheit entsprechend anzupassen. Insbesondere können auch Jerk-Evente erkannt werden, welche durch die zur Übermittlung an die übergeordnete Steuereinheit notwendige Reduktion der Übertragungsrate in der übergeordneten Steuereinheit nicht mehr aufgelöst werden könnten. Durch die Übermittlung entsprechender Jerk-Informationen an die übergeordnete Steuereinheit kann diese dann geeignet auf das erkannte Jerk-Event reagieren. Alternativ dazu kann durch die direkte Korrektur der ermittelten Bewegungsinformationen durch die Auswerteinheit eine mittelbare Anpassung der Steuerung erfolgen. Damit kann beispielsweise Rechenkapazität an der übergeordneten Steuereinheit eingespart werden bzw. ist es möglich eine einfache Steuereinheit ohne Jerk-Korrektur einzusetzen, da diese unmittelbar im Encoder vorgenommen wird.

Bevorzugt umfassen die jeweiligen Bewegungsinformationen Positions-, Geschwindigkeits- und/oder Beschleunigungsinformationen zu dem überwachten Bauteil.

Derartige Informationen sind auf relativ einfache und zuverlässige Art und Weise zu ermitteln und eignen sich besonders gut zur Jerk-Auswertung.

Bevorzugt ist die Auswerteinheit dazu ausgebildet, die Jerk-Informationen derart zu erzeugen, dass diese zumindest einen Wert zur Beschleunigungsänderung des beweglichen Bauteils anzeigen. Die Auswerteinheit ist insbesondere dazu ausgebildet, den besagten Wert zur Beschleunigungsänderung des beweglichen Bauteils unter Zuhilfenahme der dritten Ableitung des zeitlichen Verlaufs von ermittelten Positionsinformationen, der zweiten Ableitung des zeitlichen Verlaufs von ermittelten Geschwindigkeitsinformationen und/oder der ersten Ableitung des zeitlichen Verlaufs von ermittelten Beschleunigungsinformationen zu bestimmen. Kurz gesagt, können die Jerk-Informationen die erste Ableitung der Beschleunigungsinformationen umfassen.

Eine derartige Bestimmung von Jerk-Informationen ist vergleichsweise einfach und zuverlässig. Eine Kombination dieser Ermittlungsmethoden ermöglicht besonders zuverlässige und detaillierte Ergebnisse.

Bevorzugt ist die Ausgabeeinheit lediglich zur Übermittlung von Informationen mit einer Rate ausgebildet, welche niedriger als die Rate ist, mit welcher die Auswerteinheit die entsprechenden Informationen bereitstellen kann. Anders ausgedrückt kann die Auswerteinheit die Jerk-Informationen häufiger ermitteln, als die Ausgabeeinheit Informationen an die übergeordnete Steuereinheit übermittelt. Um eine derart häufige Ermittlung der Jerk-Informationen zu ermöglichen, kann die Auswerteinheit beispielsweise ausgebildet sein, direkt mit der Sensoreinrichtung zu kommunizieren und z.B. (hochfrequent abgetastete) Rohdaten der Sensoreinrichtung auswerten, um die Jerk-Informationen zu ermitteln. Beispielsweise ist es der Auswerteinheit auf diese Weise möglich, z.B. Positions-, Geschwindigkeits- und/oder Beschleunigungsinformationen derart häufig von der Sensoreinheit zu erhalten, dass keine Jerk-Evente undetektiert bleiben.

Damit kann eine einfache und günstige Ausgabe in dem Encoder eingesetzt werden und/oder die übergeordnete Steuereinheit auch besonders weit von dem Encoder entfernt und damit besonders flexibel und anwenderfreundlich, positioniert werden.

Es ergeben sich somit Vorteile gegenüber dem Stand der Technik. So ist auch im laufenden Betrieb eine Überwachung beispielsweise mechanischer Bauteile möglich (sogenanntes Condition Monitoring). Für Multi-Turn-Encoder ist es z.B. möglich, Abnutzungseffekte in den Getriebestufen zu überwachen und bei Veränderungen Warn- oder Fehlersignale auszugeben. Auch können mechanische Veränderungen auch außerhalb des Encoders (z.B. eines Lagers im Motor) überwacht werden. Überdies kann die Positions-, Geschwindigkeits- und/oder Beschleunigungsgenauigkeit erhöht werden.

Bei der Auswerteinheit kann es sich um einen Integrierten Schaltkreis (IC), beispielsweise um einen DSP (Digital Signal Processor), einen FPGA (Field Programmable Gate Array) oder einen ASIC (Application Specific Integrated Circuit) handeln. Die Auswerteinheit und die Sensoreinrichtung können z.B. innerhalb des Encoders, bevorzugt innerhalb desselben Gehäuses angeordnet sein.

Bevorzugt umfasst die Sensoreinrichtung mindestens einen, insbesondere mehrere Sensoren, insbesondere in Gestalt von Linearsensor und/oder Winkelsensoren, welche beispielsweise über Magnetsensoren, Helligkeitssensoren und/oder Photodioden die Bewegung einer Maßverkörperung erfassen.

Mehrere Sensoren ermöglichen eine besonders genaue und zuverlässige Überwachung der Bewegung des beweglichen Bauteils. Die beispielhaft genannten Sensoren sind besonders zuverlässige Typen geeigneter Sensoren.

Erfindungsgemäß ist die Auswerteinheit derart ausgebildet, dass die Korrektur der ermittelten Bewegungsinformationen lediglich zu einer Anpassung der Werte aus den Bewegungsinformationen führt, wenn zumindest ein durch die Jerk-Informationen angezeigter Wert einen voreingestellten oder variablen Schwellenwert erreicht oder übersteigt und noch unterhalb eines voreingestellten oder variablen Grenzwerts liegen.

Über den Schwellenwert kann eine geringfügige Korrektur der Bewegungsinformationen zur Einsparung von Rechenkapazität vermieden werden. Der Grenzwert definiert einen Bereich, ab welchem eine Korrektur der Bewegungsinformationen nicht mehr ausreicht, um eine zuverlässige Steuerung des Systems zu gewährleisten. Die Formulierung "variabel" umfasst dabei sowohl durch einen Benutzer einstellbare Werte als auch Werte, welche sich in Abhängigkeit von anderen Werten ändern können.

Bevorzugt ist die Auswerteinheit dazu ausgebildet, die erzeugten Jerk-Informationen mit einer Warnungs- oder Fehlermeldung zu versehen oder Jerk-Informationen in Gestalt einer solchen Warnungs- oder Fehlermeldung auszugeben, wenn der durch die Jerk-Informationen angezeigte Wert den voreingestellten oder variablen Grenzwert überschreitet bzw. überschritten hat.

Eine solche Warnungs- oder Fehlermeldung ist als separater Hinweis auf die besagte Überschreitung zu verstehen und erfordert damit keine separate Analyse durch die übergeordnete Steuereinheit zur Ermittlung einer solchen Überschreitung. Dabei ist der jeweilige Grenzwert insbesondere Encoder-spezifisch, also von dem einzelnen Encoder abhängig und in diesem hinterlegt bzw. hinterlegbar. Dies erleichtert die Integration eines erfindungsgemäßen Encoders in ein System mit einer entsprechenden übergeordneten Steuereinheit.

Bevorzugt ist die Auswerteinheit dazu ausgebildet, die Jerk-Informationen aus digitalisierten Bewegungsinformationen von der Sensoreinrichtung zu erzeugen. Die digitalisierten Bewegungsinformationen können insbesondere mit einer Abtastrate erzeugt sein, welche zumindest 10-fach, bevorzugt 100-fach, höher ist als die Rate oder Häufigkeit, mit welcher die Ausgabeeinheit Informationen an die Steuereinheit kommuniziert.

Konkret ist dabei die Sensoreinrichtung auch dazu ausgebildet, die Messignale ihrer Sensoren zu digitalisieren und als digitalisierte und damit einfach weiterzuverarbeitende Signale an die Auswerteinheit zu übermitteln.

Auch kann die Auswerteinheit dazu ausgebildet sein, die Jerk-Informationen aus analogen Bewegungsinformationen von der Sensoreinrichtung zu erzeugen und insbesondere, die entsprechenden Informationen zu digitalisieren, bevor diese an die übergeordnete Steuereinheit übermittelt werden.

Dies ermöglicht den Einsatz besonders einfach gehaltener Sensoreinrichtungen bei einer vereinfachten Weiterverarbeitung der digitalisierten Informationen. Insbesondere ermöglicht die besagte Digitalisierung auch die drahtlose Übermittlung der jeweiligen Informationen an die übergeordnete Steuereinheit.

Bevorzugt umfasst der Encoder ferner einen Speicher und/oder ein Register. Die Auswerteinheit ist dazu ausgebildet, erzeugte Jerk-Informationen, insbesondere zusammen mit einem zugehörigen Zeitstempel, in dem Speicher abzulegen bzw. in das Register zu schreiben.

Dies ermöglicht eine Sicherung der erzeugten Jerk-Informationen in dem Encoder selbst und damit eine nachträgliche Auswertung dieser, unabhängig davon, ob die Jerk-Informationen an die übergeordnete Steuereinheit übermittelt wurden oder nicht.

Ein erfindungsgemäßes System umfasst ein bewegliches Bauteil, eine übergeordnete Steuereinheit und einen zuvor beschriebenen Encoder. Der Encoder ist zur Überwachung der Bewegung des beweglichen Bauteils ausgebildet und zur Übermittlung von ermittelten Bewegungsinformationen und Jerk-Informationen und/oder von korrigierten Bewegungsinformationen mit der übergeordneten Steuereinheit gekoppelt.

Die Einbindung eines erfindungsgemäßen Encoders in ein entsprechendes System ermöglicht eine besonders zuverlässige und geeignete Steuerung der Komponenten des Systems, insbesondere bei besonders empfindlichen Systemen.

Bevorzugt umfasst das System ferner einen Aktuator zur gezielten Bewegung des Bauteils. Die übergeordnete Steuereinheit ist hierbei dazu ausgebildet, in Abhängigkeit der von dem Encoder erhaltenen Informationen den Betrieb des Aktuators zu steuern.

Ein solcher Aktuator stellt eine einfache und zuverlässige Möglichkeit zur Verwertung der an die übergeordnete Steuereinheit übermittelten Informationen dar.

Bevorzugt ist die übergeordnete Steuereinheit dazu ausgebildet, von dem Encoder erhaltene Bewegungsinformationen anhand von dem Encoder erhaltenen Jerk-Informationen zu korrigieren.

Konkret ist die übergeordnete Steuereinheit damit dazu in der Lage, anhand der Jerk-Informationen notwendige Anpassungen an den Bewegungsinformationen vorzunehmen und selbst korrigierte Bewegungsinformationen zu erzeugen. Dabei muss die übergeordnete Steuereinheit nicht versuchen, geeignete Jerk-Informationen selbst aus dem erhaltenen reduzierten Satz von ermittelten Bewegungsinformationen zu erzeugen.

Bevorzugt umfasst das System ferner eine Benutzerschnittstelle und ist dazu ausgebildet, über die Benutzerschnittstelle, insbesondere visuell und/oder akustisch, ein Warnungs- oder Fehlersignal auszugeben, wenn die von dem Encoder erhaltenen Jerk-Informationen anzeigen, dass ein durch die Jerk-Informationen angezeigter Wert einen voreingestellten oder variablen Grenzwert überschreitet, oder wenn eine entsprechende Warnungs- oder Fehlermeldung von dem Encoder erhalten wird.

Eine solche Benutzerschnittstelle erleichtert die Bedienung durch einen Benutzer und insbesondere die Fehleranalyse des Systems.

Weitere Ausführungen ergeben sich aus der folgenden Beschreibung der Figuren. In den Figuren zeigt:
- Fig.1: einen schematischen strukturellen Ausbau eines beispielhaften Systems gemäß der vorliegenden Erfindung; und
- Fig. 2: ein Prozessdiagramm zur Darstellung der Funktionalität des in Fig. 1 gezeigten Encoders.

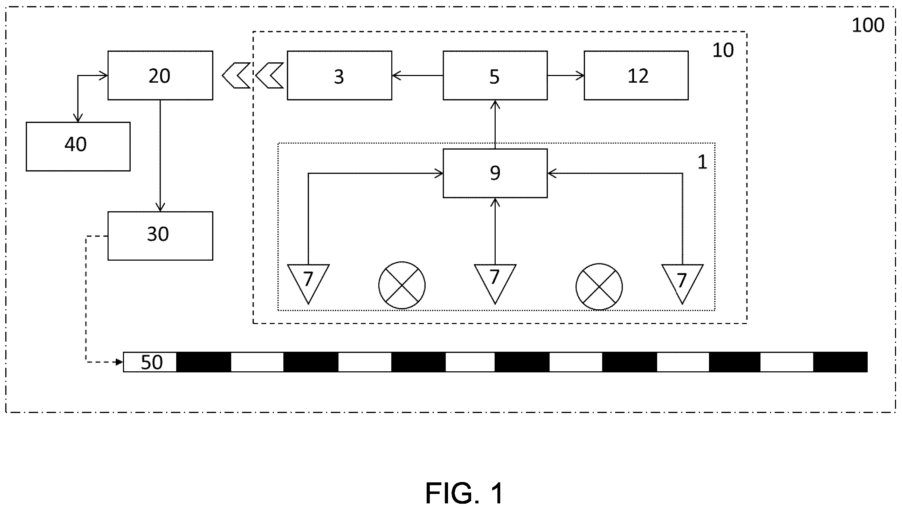

Wie in Figur 1 dargestellt ist, umfasst ein erfindungsgemäßes System 100 beispielsweise ein bewegliches Bauteil 50, eine übergeordnete Steuereinheit 20 und einem Encoder 10. Der Encoder 10 ist kommunikativ mit der übergeordneten Steuereinheit 20 gekoppelt.

Der Encoder 10 ist dazu ausgebildet, eine translatorische und/oder rotatorische Bewegungen des beweglichen Bauteils 50 zu überwachen. Hierfür umfasst der Encoder 10 eine Sensoreinrichtung 1 und eine Auswerteinheit 5. Die Sensoreinrichtung 1 umfasst wenigstens einen Sensor 7 und im gezeigten Ausführungsbeispiel eine Datensammlungs- und Verarbeitungseinheit 9, welche dazu ausgebildet ist, Signale von den Sensoren 7 zu erhalten und zur weiteren Auswertung vorbereitend zu verarbeiten.

Im gezeigten Ausführungsbeispiel handelt es sich bei den Sensoren 7 um Helligkeitssensoren, z.B. Photodioden, welche auf eine von Leuchtmitteln beleuchtete Messspur (siehe Fig. 1) auf dem beweglichen Bauteil 50 ausgerichtet sind. Die Datensammlungs- und Verarbeitungseinheit 9 ist dazu ausgebildet, analoge Helligkeitssignale von den Sensoren 7 zu erhalten und in Bewegungsinformationen, insbesondere in Gestalt von Positions- oder Geschwindigkeitsinformationen, für das bewegliche Bauteil 50 umzuwandeln und an die Auswerteinheit 5 des Encoders weiterzuleiten.

Die Auswerteinheit 5 ist dazu ausgebildet, die erhaltenen Bewegungsinformationen zu analysieren und aus diesen sogenannte Jerk-Informationen, also Informationen zu ruckhaften Bewegungen des Bauteils 50, zu generieren. Konkret macht dies die Auswerteinheit 5 über eine dreifache Ableitung des zeitlichen Verlaufs von Positionsinformationen, eine zweifache Ableitung des zeitlichen Verlaufs von Geschwindigkeitsinformationen und/oder einer einfachen Ableitung des zeitlichen Verlaufs von Beschleunigungsinformationen aus den erhaltenen Bewegungsinformationen. Ein Peak in dem Verlauf der jeweiligen Ableitung zeigt direkt einen Ruck in der Bewegung des beweglichen Bauteils 50 an.

Die Auswerteinheit 5 ist vorliegend dazu ausgebildet, die erzeugten Jerk-Informationen in einem vorgesehenen Speicher oder Register 12 abzuspeichern bzw. einzutragen. Dies erfolgt bevorzugt jeweils zusammen mit einem entsprechenden Zeitstempel. Ferner kann die Auswerteinheit 5 entweder anhand der erzeugten Jerk-Informationen eine Korrektur der ermittelten Bewegungsinformationen vornehmen und zumindest einen Teil der korrigierten Bewegungsinformationen zur Übermittlung an die übergeordnete Steuereinheit 20 an eine entsprechende Ausgabeeinheit 3 übergeben, oder die erzeugten Jerk-Informationen zusammen mit den ermittelten Bewegungsinformationen zur Übermittlung an die übergeordnete Steuereinheit 20 an eine entsprechende Ausgabeeinheit 3 übergeben.

Die Ausgabeeinheit 3 ist zur Kommunikation mit der übergeordneten Steuereinheit 20 gekoppelt und übermittelt die von der Auswerteinheit 5 erhaltenen Information in geeigneter Weise an die übergeordnete Steuereinheit 20. Dabei wird lediglich ein Teil der von der Sensoreinrichtung 1 erzeugten Informationen in komprimierter bzw. abstrahierter Form an die übergeordnete Steuereinheit 20 übermittelt. Die Komprimierung bzw. Abstrahierung ist notwendig, um eine Echtzeitübertragung der Informationen erreichen zu können und ist damit durch die zur Verfügung stehende Übertragungsrate zwischen der Ausgabeeinheit 3 und er übergeordneten Steuereinheit 20 notwendig.

Vorliegend ist die Auswerteinheit 5 dazu ausgebildet, dass die Korrektur der ermittelten Bewegungsinformationen lediglich zu einer Anpassung der Werte aus den Bewegungsinformationen führt, wenn zumindest ein durch die Jerk-Informationen angezeigter Wert einen voreingestellten oder variablen Schwellenwert erreicht oder übersteigt und noch unterhalb eines voreingestellten oder variablen Grenzwerts liegen. Mit anderen Worten, eine Korrektur der ermittelten Bewegungsinformationen erfolgt lediglich innerhalb eines bestimmten Bereichs.

Dies führt zu folgenden drei Situationen:
A) Die Jerk-Informationen werden von der Auswerteinheit 5 genutzt, um die ermittelten Bewegungsinformationen zu korrigieren, wobei die Korrekturen jedoch aufgrund der Unterschreitung des Schwellenwerts keine Änderung der Bewegungsinformationen bewirken. Dies ist effektiv gleichbedeutend mit einem Verzicht auf die Korrektur der Bewegungsinformationen bei Unterschreitung des Schwellenwerts.
B) Die Jerk-Informationen werden von der Auswerteinheit 5 genutzt, um die ermittelten Bewegungsinformationen zu korrigieren, wobei die Korrekturen aufgrund der Erreichung oder Überschreitung des Schwellenwerts tatsächliche Änderung der Bewegungsinformationen bewirken.
C) Die Jerk-Informationen werden von der Auswerteinheit 5 nicht genutzt, um die ermittelten Bewegungsinformationen zu korrigieren, weil der Grenzwert überschritten wird. In diesem Fall versieht die Auswerteinheit 5 die erzeugten Jerk-Informationen mit einer Warnungs- oder Fehlermeldung oder gibt die Jerk-Informationen in Gestalt einer solchen Warnungs- oder Fehlermeldung aus.

Eine Datenübermittlung von der Datensammlungs- und Verarbeitungseinheit 9 an die Auswerteinheit 5 kann entweder analog oder digital erfolgen, wobei die Übermittlung der Informationen an die übergeordnete Steuereinheit 20 bevorzugt immer digital erfolgt. Dies ermöglicht eine flexiblere und effizientere Übermittlung sowie Weiterverarbeitung der jeweiligen Informationen.

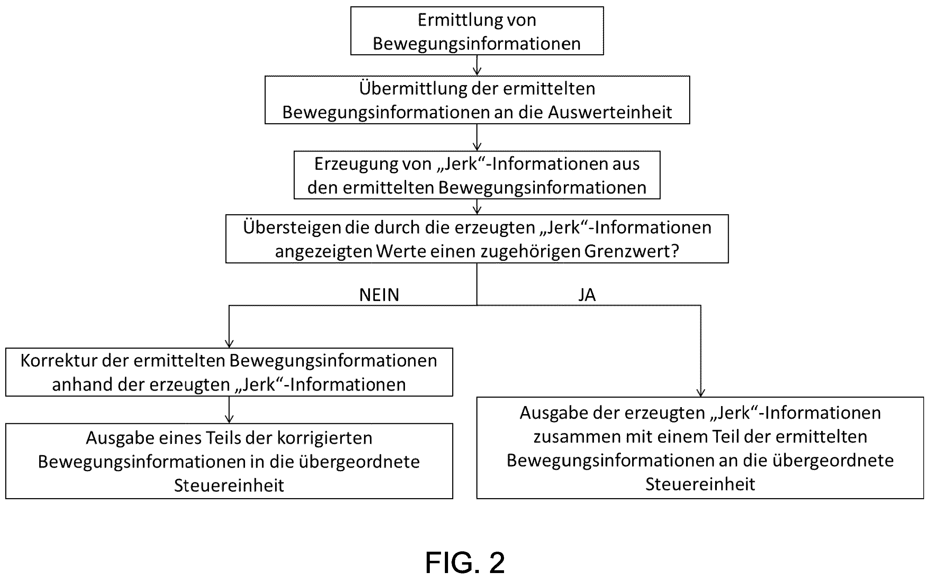

Ein Ablaufdiagramm, aus welchem die prinzipielle Funktionalität des gezeigten Encoders 10 hervorgeht, ist der Anschaulichkeit halber in FIG. 2 dargestellt, wird jedoch zur Vermeidung einer unnötigen Wiederholung im Folgenden nicht noch einmal im Detail beschrieben.

Zurückkommend auf Fig. 1 umfasst das beispielhafte System 100 auch einen Aktuator 30 zur gezielten Bewegung des Bauteils 50. Die übergeordnete Steuereinheit 20 ist dazu ausgebildet, in Abhängigkeit der von dem Encoder 10 erhaltenen Informationen den Betrieb des Aktuators 30 zu steuern.

Fall die übergeordnete Steuereinheit 20 von dem Encoder 10 Bewegungsinformationen und Jerk-Information erhält, kann sie entweder selbst eine Korrektur der Bewegungsinformationen vornehmen oder sein Verhalten anderweitig in Abhängigkeit der erhaltenen Jerk-Informationen anpassen.

Schließlich kann das System 100 auch eine Benutzerschnittstelle 40 umfassen, über welche beispielsweise visuell und/oder akustisch ein Warnungs- oder Fehlersignal ausgegeben werden kann, wenn von dem Encoder 10 erhaltene Jerk-Informationen anzeigen, dass ein durch die Jerk-Informationen angezeigter Wert einen voreingestellten oder variablen Grenzwert überschreitet, oder wenn eine entsprechende Warnungs- oder Fehlermeldung von dem Encoder 10 erhalten wird.

Abschließend sei darauf hingewiesen, dass es sich bei dem gezeigten Ausführungsbeispiel lediglich um eine von vielen Möglichkeiten zur Umsetzung der beanspruchten Ausgestaltung handelt. Das beschriebene Ausführungsbeispiel soll dabei nicht unmittelbar zur Beschränkung des Schutzbereichs fungieren. Dieser wird lediglich durch die unabhängigen Patentansprüche definiert.

### Bezugszeichenliste

- 1: Sensoreinrichtung
- 3: Ausgabeeinheit
- 5: Auswerteinheit
- 7: Sensor
- 9: Datensammlungs- und Verarbeitungseinheit
- 10: Encoder
- 12: Speicher oder Register
- 20: übergeordnete Steuereinheit
- 30: Aktuator
- 40: Benutzerschnittstelle
- 50: bewegliches Bauteil
- 100: System

## Patentansprüche

1. Encoder (10) zur Überwachung translatorischer und/oder rotatorischer Bewegungen eines beweglichen Bauteils (50), wobei der Encoder (10) umfasst:
eine Sensoreinrichtung (1), welche dazu ausgebildet ist, Bewegungsinformationen zu dem überwachten Bauteil (50) zu ermitteln;
eine Ausgabeeinheit (3), welche dazu ausgebildet ist, mit einer übergeordneten Steuereinheit (20) zu kommunizieren; und
eine Auswerteinheit (5), welche dazu ausgebildet ist, aus den ermittelten Bewegungsinformationen Jerk-Informationen, welche einen Ruck des überwachten Bauteils (50) anzeigen, zu erzeugen,
**dadurch gekennzeichnet, dass**
die Auswerteinheit (5) ferner dazu ausgebildet ist:
anhand der erzeugten Jerk-Informationen Korrekturen an den ermittelten Bewegungsinformationen vorzunehmen und zumindest einen Teil der korrigierten Bewegungsinformationen an die Ausgabeeinheit (3) zu übergeben;
wobei die Ausgabeeinheit (3) dazu ausgebildet ist:
einen Teil der korrigierten Bewegungsinformationen an die übergeordnete Steuereinheit (20) auszugeben;
wobei die Auswerteinheit (5) derart ausgebildet ist, dass die Korrektur der ermittelten Bewegungsinformationen lediglich zu einer Anpassung der Werte aus den Bewegungsinformationen führt, wenn zumindest ein durch die Jerk-Informationen angezeigter Wert einen voreingestellten oder variablen Schwellenwert erreicht oder übersteigt und noch unterhalb eines voreingestellten oder variablen Grenzwerts liegen.

2. Encoder (10) nach Anspruch 1,
wobei die Bewegungsinformationen Positions-, Geschwindigkeits- und/oder Beschleunigungsinformationen zu dem überwachten Bauteil (50) umfassen.

3. Encoder (10) nach Anspruch 2,
wobei die Auswerteinheit (5) dazu ausgebildet ist, die Jerk-Informationen derart zu erzeugen, dass diese zumindest einen Wert zur Beschleunigungsänderung des beweglichen Bauteils (50) anzeigen,
wobei die Auswerteinheit (5) insbesondere dazu ausgebildet ist, den besagten Wert zur Beschleunigungsänderung des beweglichen Bauteils (50) unter Zuhilfenahme der dritten Ableitung des zeitlichen Verlaufs von ermittelten Positionsinformationen, der zweiten Ableitung des zeitlichen Verlaufs von ermittelten Geschwindigkeitsinformationen und/oder der ersten Ableitung des zeitlichen Verlaufs von ermittelten Beschleunigungsinformationen zu bestimmen.

4. Encoder (10) nach einem der vorhergehenden Ansprüche,
wobei die Ausgabeeinheit (3) lediglich zur Übermittlung von Informationen mit einer Rate ausgebildet ist, welche niedriger als die Rate ist, mit welcher die Auswerteinheit (5) die entsprechenden Informationen bereitstellen kann.

5. Encoder (10) nach einem der vorhergehenden Ansprüche,
wobei die Sensoreinrichtung (1) mindestens einen, insbesondere mehrere Sensoren (7), insbesondere in Gestalt von Linearsensoren und/oder Winkelsensoren, umfasst, welche insbesondere über Magnetsensoren, Helligkeitssensoren und/oder Photodioden die Bewegung einer Maßverkörperung erfassen.

6. Encoder (10) nach Anspruch 1,
wobei die Auswerteinheit (5) dazu ausgebildet ist, die erzeugten Jerk-Informationen mit einer Warnungs- oder Fehlermeldung zu versehen oder Jerk-Informationen in Gestalt einer solchen Warnungs- oder Fehlermeldung auszugeben, wenn der durch die Jerk-Informationen angezeigte Wert den voreingestellten oder variablen Grenzwert überschreitet oder überschritten hat.

7. Encoder (10) nach einem der vorhergehenden Ansprüche,
wobei die Auswerteinheit (5) dazu ausgebildet ist, die Jerk-Informationen aus digitalisierten Bewegungsinformationen von der Sensoreinrichtung (1) zu erzeugen.

8. Encoder (10) nach einem der Ansprüche 1 bis 6,
wobei die Auswerteinheit (5) dazu ausgebildet ist, die Jerk-Informationen aus analogen Bewegungsinformationen von der Sensoreinrichtung (1) zu erzeugen und insbesondere, die entsprechenden Informationen zu digitalisieren, bevor diese an die übergeordnete Steuereinheit (20) übermittelt werden.

9. Encoder (10) nach einem der vorhergehenden Ansprüche,
ferner umfassend einen Speicher (12) und/oder ein Register (12), wobei die Auswerteinheit (5) dazu ausgebildet ist, erzeugte Jerk-Informationen, insbesondere zusammen mit einem zugehörigen Zeitstempel, in dem Speicher (12) abzulegen oder in das Register (12) zu schreiben.

10. System (100) mit einem beweglichen Bauteil (50), einer übergeordneten Steuereinheit (20) und einem Encoder (10) nach einem der vorhergehenden Ansprüche,
wobei der Encoder (10) zur Überwachung der Bewegung des beweglichen Bauteils (50) ausgebildet ist und zur Übermittlung von korrigierten Bewegungsinformationen mit der übergeordneten Steuereinheit (20) gekoppelt ist.

11. System (100) nach Anspruch 10,
wobei das System (100) ferner einen Aktuator (30) zur gezielten Bewegung des Bauteils (50) umfasst und die übergeordnete Steuereinheit (20) dazu ausgebildet ist, in Abhängigkeit der von dem Encoder (10) erhaltenen Informationen den Betrieb des Aktuators (30) zu steuern.

12. System (100) nach Anspruch 10 oder 11,
wobei das System (100) ferner eine Benutzerschnittstelle (40) umfasst und dazu ausgebildet ist, über die Benutzerschnittstelle (40), insbesondere visuell und/oder akustisch, ein Warnungs- oder Fehlersignal auszugeben, wenn die von dem Encoder (10) erhaltenen Jerk-Informationen anzeigen, dass ein durch diese angezeigter Wert einen voreingestellten oder variablen Grenzwert überschreitet, oder wenn eine entsprechende Warnungs- oder Fehlermeldung von dem Encoder (10) erhalten wird.

## Claims

1. An encoder (10) for monitoring translational and/or rotational movements of a movable component (50), wherein the encoder (10) comprises:
a sensor device (1) which is configured to determine movement information about the monitored component (50);
an output unit (3) which is configured to communicate with a higher-ranking control unit (20); and
an evaluation unit (5) which is configured to generate jerk information,
which indicates a jerk of the monitored component (50), from the determined movement information,
**characterized in that**
the evaluation unit (5) is further configured:
based on the generated jerk information, to make corrections to the determined movement information and to transfer at least a portion of the corrected movement information to the output unit (3);
wherein the output unit (3) is configured:
to output a portion of the corrected movement information to the higher-ranking control unit (20);
wherein the evaluation unit (5) is configured such that the correction of the determined movement information only leads to an adjustment of the values from the movement information if at least one value indicated by the jerk information reaches or exceeds a preset or variable threshold value and is still below a preset or variable limit value.

2. An encoder (10) according to claim 1,
wherein the movement information comprises position, velocity and/or acceleration information about the monitored component (50).

3. An encoder (10) according to claim 2,
wherein the evaluation unit (5) is configured to generate the jerk information such that it indicates at least one value for the change in acceleration of the movable component (50),
wherein the evaluation unit (5) is in particular configured to determine said value for the change in acceleration of the movable component (50) with the aid of the third derivative of the time development of determined position information, the second derivative of the time development of determined velocity information and/or the first derivative of the time development of determined acceleration information.

4. An encoder (10) according to any one of the preceding claims,
wherein the output unit (3) is only configured to transmit information at a rate that is lower than the rate at which the evaluation unit (5) can provide the corresponding information.

5. An encoder (10) according to any one of the preceding claims,
wherein the sensor device (1) comprises at least one, in particular a plurality of sensors (7), in particular in the form of linear sensors and/or angle sensors, which detect the movement of a material measure in particular via magnetic sensors, brightness sensors and/or photodiodes.

6. An encoder (10) according to claim 1,
wherein the evaluation unit (5) is configured to provide the generated jerk information with a warning message or an error message or to output jerk information in the form of such a warning message or error message if the value indicated by the jerk information exceeds or has exceeded the preset or variable limit value.

7. An encoder (10) according to any one of the preceding claims,
wherein the evaluation unit (5) is configured to generate the jerk information from digitized movement information from the sensor device (1).

8. An encoder (10) according to any one of the claims 1 to 6,
wherein the evaluation unit (5) is configured to generate the jerk information from analog movement information from the sensor device (1) and in particular to digitize the corresponding information before it is transmitted to the higher-ranking control unit (20).

9. An encoder (10) according to any one of the preceding claims,
further comprising a memory (12) and/or a register (12),
wherein the evaluation unit (5) is configured to store generated jerk information, in particular together with an associated time stamp, in the memory (12) or to write it to the register (12).

10. A system (100) comprising a movable component (20), a higher-ranking control unit (20) and an encoder (10) according to any one of the preceding claims,
wherein the encoder (10) is configured to monitor the movement of the movable component (50) and is coupled to the higher-ranking control unit (20) in order to transmit corrected movement information.

11. A system (100) according to claim 10,
wherein the system (100) further comprises an actuator (30) for the targeted movement of the component (50) and the higher-ranking control unit (20) is configured to control the operation of the actuator (30) in dependence on the information received from the encoder (10).

12. A system (100) according to claim 10 or 11,
wherein the system (100) further comprises a user interface (40) and is configured to output a warning signal or an error signal via the user interface (40), in particular visually and/or acoustically, if the jerk information received from the encoder (10) indicates that a value indicated by said jerk information exceeds a preset or variable limit value, or if a corresponding warning message or error message is received from the encoder (10).

## Revendications

1. Codeur (10) pour surveiller les mouvements de translation et/ou de rotation d'un composant mobile (50), le codeur (10) comprenant :
un dispositif capteur (1) conçu pour déterminer des informations de mouvement relatives au composant surveillé (50) ;
une unité de sortie (3) conçue pour communiquer avec une unité de commande supérieure (20) ; et
une unité d'évaluation (5) conçue pour générer, à partir des informations de mouvement déterminées, des informations d'à-coup indiquant un à-coup du composant surveillé (50),
**caractérisé en ce que**
l'unité d'évaluation (5) est en outre conçue pour :
corriger les informations de mouvement déterminées en se basant sur les informations d'à-coup générées, et
transmettre au moins une partie des informations de mouvement corrigées à l'unité de sortie (3) ;
l'unité de sortie (3) est conçue pour :
transmettre une partie des informations de mouvement corrigées à l'unité de commande supérieure (20) ;
sachant que l'unité d'évaluation (5) est conçue de telle sorte que la correction des informations de mouvement déterminées n'entraîne une adaptation des valeurs, issues des informations de mouvement, que si au moins une valeur indiquée par les informations d'à-coup atteint ou dépasse une valeur seuil prédéfinie ou variable et se situe encore en dessous d'une valeur limite prédéfinie ou variable.

2. Codeur (10) selon la revendication 1,
dans lequel les informations de mouvement comprennent des informations de position, de vitesse et/ou d'accélération relatives au composant surveillé (50).

3. Codeur (10) selon la revendication 2,
dans lequel l'unité d'évaluation (5) est conçue pour générer les informations d'à-coup de telle sorte qu'elles indiquent au moins une valeur relative à la variation de l'accélération du composant mobile (50),
en particulier, l'unité d'évaluation (5) est conçue pour définir ladite valeur relative à la variation de l'accélération du composant mobile (50) à l'aide de la dérivée troisième de l'évolution dans le temps des informations de position déterminées, de la dérivée deuxième de l'évolution dans le temps des informations de vitesse déterminées et/ou de la dérivée première de l'évolution dans le temps des informations d'accélération déterminées.

4. Codeur (10) selon l'une des revendications précédentes,
dans lequel l'unité de sortie (3) est uniquement conçue pour transmettre des informations à un taux inférieur au taux auquel l'unité d'évaluation (5) peut fournir les informations correspondantes.

5. Codeur (10) selon l'une des revendications précédentes,
dans lequel le dispositif capteur (1) comprend au moins un, en particulier plusieurs capteurs (7), en particulier sous la forme de capteurs linéaires et/ou de capteurs angulaires, qui détectent le mouvement d'une mesure matérialisée, en particulier par l'intermédiaire de capteurs magnétiques, de capteurs de luminosité et/ou de photodiodes.

6. Codeur (10) selon la revendication 1,
dans lequel l'unité d'évaluation (5) est conçue pour associer les informations d'à-coup générées à un message d'avertissement ou d'erreur ou pour émettre des informations d'à-coup sous la forme d'un tel message d'avertissement ou d'erreur lorsque la valeur indiquée par les informations d'à-coup dépasse ou a dépassé la valeur limite prédéfinie ou variable.

7. Codeur (10) selon l'une des revendications précédentes,
dans lequel l'unité d'évaluation (5) est conçue pour générer les informations d'à-coup à partir d'informations de mouvement numérisées provenant du dispositif capteur (1).

8. Codeur (10) selon l'une des revendications 1 à 6,
dans lequel l'unité d'évaluation (5) est conçue pour générer les informations d'à-coup à partir d'informations de mouvement analogiques provenant du dispositif capteur (1) et, en particulier, pour numériser les informations correspondantes avant de ne les transmettre à l'unité de commande supérieure (20).

9. Codeur (10) selon l'une des revendications précédentes,
comprenant en outre une mémoire (12) et/ou un registre (12),
l'unité d'évaluation (5) étant conçue pour enregistrer les informations d'à-coup générées, en particulier conjointement avec un horodatage associé, dans la mémoire (12) ou pour les écrire dans le registre (12).

10. Système (100) comprenant un composant mobile (50), une unité de commande supérieure (20) et un codeur (10) selon l'une des revendications précédentes,
le codeur (10) étant conçu pour surveiller le mouvement du composant mobile (50) et étant couplé à l'unité de commande supérieure (20) pour transmettre des informations de mouvement corrigées.

11. Système (100) selon la revendication 10,
le système (100) comprenant en outre un actionneur (30) pour le déplacement ciblé de l'élément (50), et l'unité de commande supérieure (20) étant conçue pour commander le fonctionnement de l'actionneur (30) en fonction des informations reçues du codeur (10).

12. Système (100) selon la revendication 10 ou 11,
le système (100) comprenant en outre une interface utilisateur (40) et étant conçu pour émettre, via l'interface utilisateur (40), en particulier visuellement et/ou acoustiquement, un signal d'avertissement ou d'erreur si les informations d'à-coup reçues du codeur (10) indiquent qu'une valeur indiquée par celles-ci dépasse une valeur limite prédéfinie ou variable, ou si un message d'avertissement ou d'erreur correspondant est reçu du codeur (10).
